# EUROPEAN PATENT SPECIFICATION

(11) **EP 0 509 786 B1**
(45) Date of publication and mention of the grant of the patent: **15.03.1995**
(21) Application number: 92303384.9
(22) Date of filing: 15.04.1992
(51) Int. Cl.: B62B 5/04

(54) **Brake mechanism**
Bremsvorrichtung
Dispositif de frein

(30) Priority: 16.04.1991 GB 9108113
(43) Date of publication of application: 21.10.1992
(73) Proprietor: TWIL HANDLING & DISPLAY LIMITED, Nottingham NG16 3JD (GB)
(72) Inventor: Brown, Barry, Hickling, Leicestershire LE14 3AH (GB)
(74) Representative: Hulse, Thomas Arnold

(56) References cited:
- WO-A-84/03073
- BE-A- 696 247
- DE-A- 3 833 252
- DE-C- 4 003 561
- GB-A- 1 382 806

## Description

This invention relates to brake mechanisms for wheeled units, such a trollies, rollpallets and the like, and particularly but not exclusively to parking brakes for such units.

Parking brakes are required to restrain units during loading or unloading or whilst the unit is parked, i.e., within a vehicle. Previously braking has been achieved by fitting foot operated brakes to swivel castors or by incorporating a mechanism into the structure of the wheeled unit to provide brake operation by means of a hand brake.

Frequent adjustment of these systems is necessary to allow for tyre wear or brake pad wear which is often difficult and/or costly to effect. In many instances the responsibility is on the operator of the wheeled unit to identify that the brakes are ineffective and notify maintenance engineers, but in practice, wheeled units continue to be used with ineffective brakes increasing the risk of serious accidents.

GB-A-1 382 806 discloses a brake mechanism for a wheeled unit comprising a brake rod movable longitudinally in a wheel mounting and a brake handle mounting, one end of which brake rod is adapted to engage the periphery of the wheel; a brake handle adapted to move between a release position and a braked position; and means on the brake handle mounting for releasably retaining the brake handle in the braked position; the mechanism being further provided with a compression spring between the brake handle and an abutment on the brake rod, whereby initial movement of the brake handle from the release position moves the brake rod into engagement with the wheel.

The wheel in GB-A-1 382 806 is provided with an axially directed flange having a series of radially directed holes into any one of which the end of the brake rod may enter, to stop rotation of the wheel, when the compression spring urges the end of the brake rod towards the flange upon movement of the brake handle from the release position.

WO-A-84/03073 discloses a braking mechanism that operates on the principle of applying a brake shoe, in the form of a disc, against the periphery of a wheel. The wheels, in order to be durable, have been made of relatively hard materials, such as nylon or polyurethane, and the forces on the brake shoe need to be high to ensure effective braking. Thus, mechanisms to apply these forces are therefore complex or resultant wear either in the mechanism or in the tyre or brake pad can render the brake ineffective. In fact quite a low degree of wear will result in considerable loss of brake power.

Recently wheels have been provided with tyres of a new high performance resilient rubber which whilst softer than conventional tyres are tougher and very durable. Consequently the softness of the tyre permits much lower brake forces.

According to the present invention, a brake mechanism for a wheeled unit comprises a brake rod movable longitudinally in a wheel mounting and a brake handle mounting, one end of which brake rod is adapted to engage the periphery of the wheel; a brake handle adapted to move between a release position and a braked position; and means on the brake handle mounting for releasably retaining the brake handle in the braked position; the mechanism being further provided with a compression spring between the brake handle and a abutment on the brake rod, whereby initial movement of the brake handle from the release position moves the brake rod into engagement with the wheel; characterised in that continued movement of the brake handle towards the braked position compresses the compression spring to load the brake rod against the wheel; and in that a second compression spring is provided between the wheel mounting and a second abutment on the brake rod and having a lesser rating than the first compression spring, whereby the brake rod is moved out of engagement with the wheel when the brake handle is released from the braked position and is moved back into the release position.

The invention further includes a wheeled unit according to claim 6.

The retaining means on the brake handle mounting may be provided by means of a block having a longitudinal slot therein, into which the brake handle projects, the slot, defining the movement of the handle between the release position and the braked position, being provided at one end with a lateral recess to hold the brake handle in the locked position. A further lateral recess is preferably provided at the other end of the slot to hold the brake handle in the release position. The block is conveniently provided with a guide bore intersecting the slot substantially at right angles to that portion of the brake handle which projects into the slot, said bore slidably receiving a sleeve that is slidable on the brake rod between the first compression spring and the brake handle. The abutments on the brake rod are conveniently provided by washers welded in the rod.

It can be seen that the invention ensures that the braking forces are applied via the compression springs and that there is no rigid direct linkage between the handle and the wheel. It is a further advantage that wear on the wheels does not diminish the effectiveness of the brake.

Conveniently on a wheeled unit a pair of brake mechanisms are provided one on each of a pair of wheels, which mechanisms are preferably connected by a common handle.

The brake handle may act upon the brake rod directly, or through the sleeve, but preferably is connected by means of a linkage to a brake bar which acts upon the brake rod or sleeve.

The invention will now be described, by way of example, with reference to the accompanying drawings in which:-
Figure 1 is a perspective of a wheeled unit having a pair of brake mechanisms in accordance with the invention;
Figure 2 is an exploded perspective of one brake mechanism in its release position in accordance with the invention;
Figure 3 corresponds to Figure 2 but shows the other brake mechanism of Figure 1 in partial engagement;
Figure 4 is a fragmentary side elevation of the brake mechanism of Figure 2 in its release position;
Figure 5 corresponds to Figure 4 but shows the brake mechanism in its braked position;
Figure 6 is a sectional side elevation of the linkage between the handle and the brake rod, of Figure 1, in its release position;
Figure 7 corresponds to Figure 6 but shows the handle intermediate its release and braking position; and
Figure 8 corresponds to Figure 6 but shows the handle in its braking position.

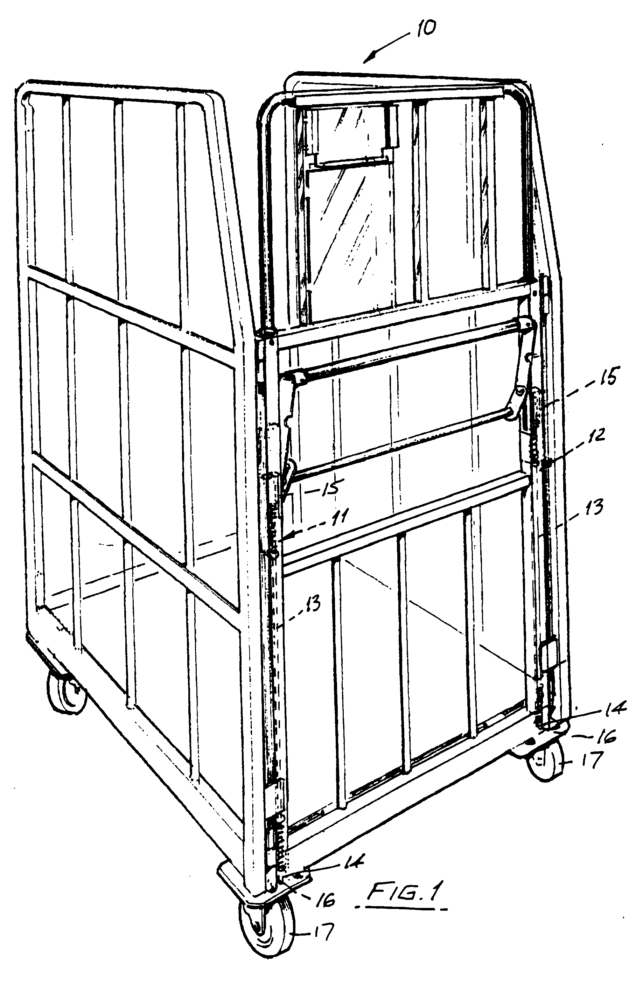

In Figure 1 a wheeled unit (10) is provided with a pair of brake mechanisms (11) and (12) each comprising a brake rod (13) movable longitudinally in a wheel mounting (14) and a brake-handle mounting (15), one end (16) of the brake rod (13) being adapted to engage the periphery of a wheel (17).

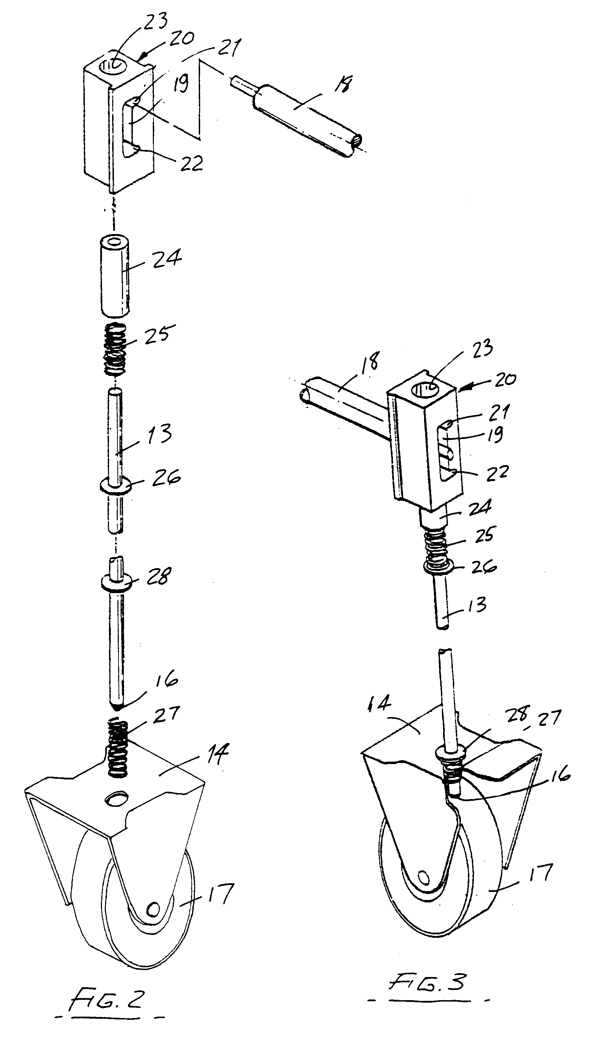

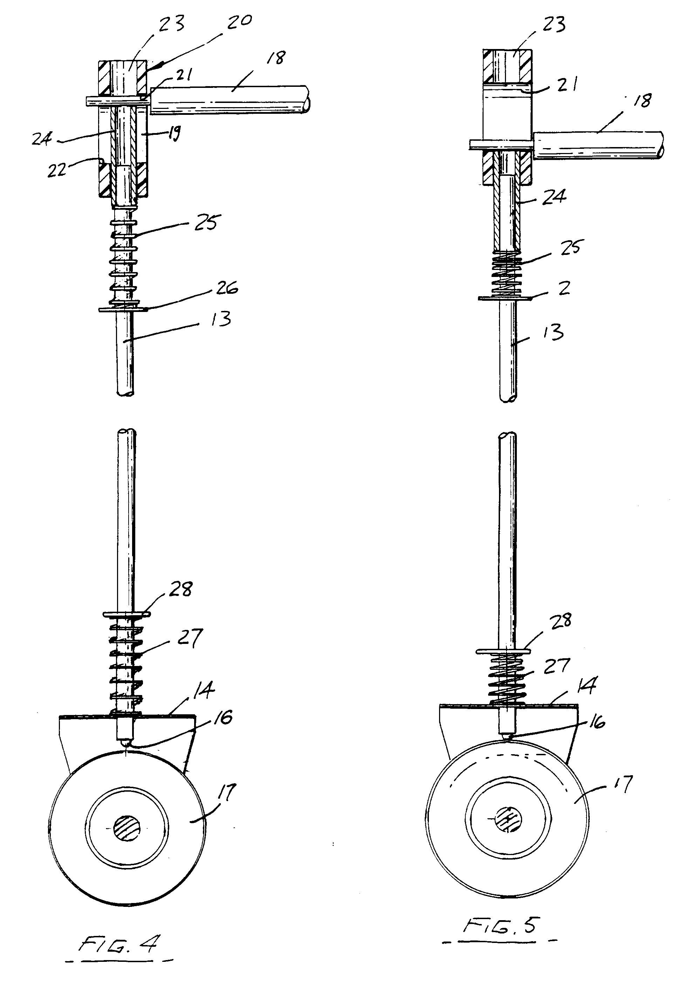

Referring to Figures 2 to 5 a brake handle (18) projects into a slot (19) in a block (20), the slot having an upper lateral recess (21) to hold the handle in its released position (see particularly figures 2 and 4) and a lower lateral recess (22) to hold the handle in its braked position (see particularly Figures 3 and 5), the block has a guide bore (23) intersecting the slot (19) and slidably receives a sleeve (24) slidable on the brake rod (13) between a first compression spring (25) and the handle, which spring abuts a first abutment (26) on the brake rod (13) whereby initial movement of the brake handle (18) from the release position moves the brake rod (13) into engagement with the wheel, whilst continued movement of the brake handle (18) towards the braked position compresses the first compression spring (25) to load the brake rod (13) against the wheel. A second compression spring (27) is provided between the wheel mounting (14) and a second abutment (28) on the rod (13) whereby the brake rod is moved out of engagement with the wheel (17) when the brake handle is released from the braked position and is moved back into the release position.

Thus, in Figures 2 to 5 it can be seen that by releasing the handle (18) from the upper lateral recess (21) and urging it down onto the sleeve (24) against the first spring (25) forces the brake rod (13) onto the wheel (17) thereby creating effective braking of the unit.

During use the wheel may become greatly worn but the mechanism remains effective even after the wheel (17) is worn to the level shown by the line (29) in Figure 5.

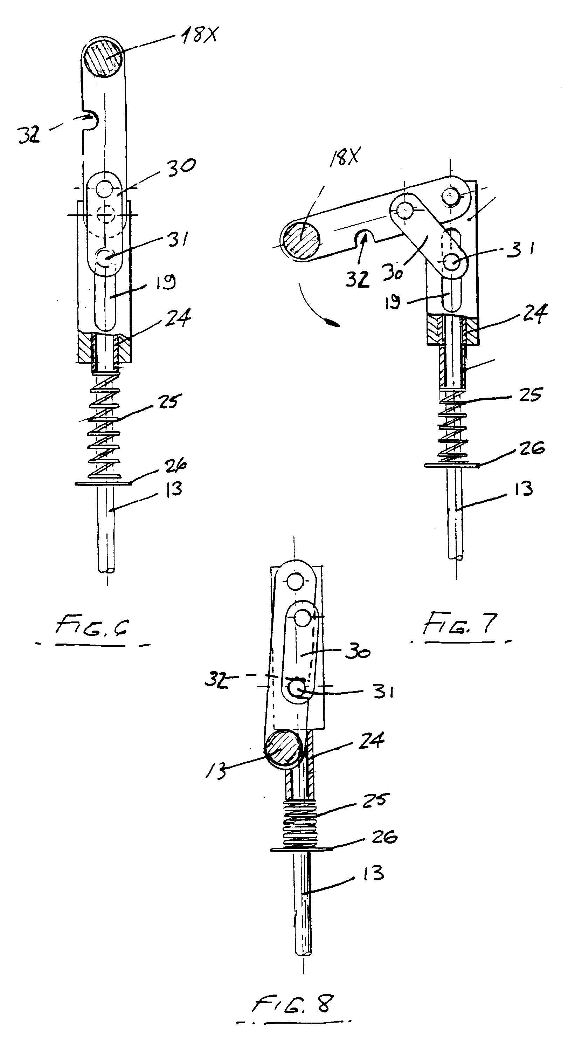

In Figures 6 to 8 the handle (18X) is connected by means of a linkage (30) to a brake bar (31) which acts upon the sleeve (24) to activate the brake. Detent means (32) are provided to lock the brake on, as an alternative, or in addition to the recesses in the block.

## Claims

1. A brake mechanism for a wheeled unit comprising: a brake rod (13) moveable longitudinally in a wheel mounting (14) and a brake handle mounting (15), one end (16) of which brake rod (13) is adapted to engage the periphery of the wheel; (17) a brake handle (18) adapted to move between a release position and a braked position; and means on the brake handle mounting for releasably retaining the brake handle (18) in the braked position; the mechanism being further provided with a compression spring (25) between the brake handle (18) and an abutment (26) on the brake rod (13), whereby initial movement of the brake handle (18) from the release position moves the brake rod (13) into engagement with the wheel (17), characterised in that continued movement of the brake handle towards the braked position compresses the compression spring (25) to load the brake rod (13) against the wheel (17), and in that a second compression spring (27) is provided between the wheel mounting and a second abutment (28) on the brake rod (13) having a lesser rating than the first compression spring (25), whereby the brake rod (13) is moved out of engagement with the wheel (17) when the brake handle (18) is released from the braked position and is moved back into the release position.

2. A brake mechanism for a wheeled unit as claimed in Claim 1, characterised in that the retaining means on the brake handle mounting is provided by a block (20) having a longitudinal slot (19) therein, into which the brake handle projects, the slot, defining the movement of the handle between the release position and the braked position, being provided at one end with a lateral recess (21) to hold the brake handle in the locked position.

3. A brake mechanism for a wheeled unit as claimed in Claim 2, characterised in that a further lateral recess (22) is provided at the other end of the slot (19) to hold the brake handle in the release position.

4. A brake mechanism for a wheeled unit as claimed in either of Claims 2 or 3, characterised in that the block is provided with a guide bore (23) intersecting the slot (19) substantially at right angles to that portion of the brake handle which projects into the slot, said bore slidably receiving a sleeve (24) that is slidable on the brake rod between the first compression spring and the brake handle.

5. A brake mechanism for a wheeled unit as claimed in any preceding Claim, characterised in that the abutments (26, 28) on the brake rod (13) are provided by washers welded on the rod.

6. A wheeled unit having at least one brake mechanism comprising: a brake rod (13) moveable longitudinally in a wheel mounting (14) and a brake handle mounting (15), one end (16) of which brake rod (13) is adapted to engage the periphery of the wheel; (17) a brake handle (18) adapted to move between a release position and a braked position; and means on the brake handle mounting for releasably retaining the brake handle (18) in the braked position; the mechanism being further provided with a compression spring (25) between the brake handle (18) and an abutment (26) on the brake rod (13), whereby initial movement of the brake handle (18) from the release position moves the brake rod (13) into engagement with the wheel (17), characterised in that continued movement of the brake handle towards the braked position compresses the compression spring (25) to load the brake rod (13) against the wheel (17), and in that a second compression spring (27) is provided between the wheel mounting and a second abutment (28) on the brake rod (13) having a lesser rating than the first compression spring (25), whereby the brake rod (13) is moved out of engagement with the wheel (17) when the brake handle (18) is released from the braked position and is moved back into the release position.

7. A wheeled unit as claimed in Claim 6, characterised by being provided with a pair of brake mechanisms, one on each of a pair of wheels (17).

8. A wheeled unit as claimed in Claim 7, characterised in that the mechanisms are activated by a common handle (18) acting upon the brake rods (13).

9. A wheeled unit as claimed in Claim 8, characterised in that the handle (18) is connected by means of a linkage (30) to a brake bar (31) which acts upon the brake rods (13).

## Patentansprüche

1. Bremsvorrichtung für Rädergestelle (10), mit einer Bremsstange (13), welche axialbeweglich in einer Radaufhängung (14) angeordnet ist, wobei ein Ende (16) der Bremsstange (13) zum Eingriff auf der Lauffläche eines Rades (17) eingerichtet ist, ferner mit einer Bremsgriffhalterung (15) und einem Bremsgriff (18), welcher zwischen einer Freigabestellung und einer Bremsstellung bewegbar ist, mit Mitteln an der Bremsgriffhalterung (15) zum lösbaren Festhalten des Bremsgriffes (18) in der Bremsstellung, und mit einer Druckfeder (25) zwischen dem Bremsgriff (18) und einem Widerlager (26) an der Bremsstange (13), wobei zu Beginn der Betätigung des Bremsgriffes (18) von der Freigabestellung aus die Bremsstange (13) in Eingriff mit dem Rad (17) bewegt wird, **dadurch gekennzeichnet**, daß durch die weitergehende Betätigung des Bremsgriffes (18) in die Bremsstellung die Druckfeder (25) unter Belastung der Bremsstange (13) gegen das Rad (17) zusammengedrückt wird, und daß eine zweite Druckfeder (27) zwischen der Radaufhängung (14) und einem zweiten Widerlager (28) an der Bremsstange (13) vorgesehen ist, welche eine geringere Federkonstante als die erste Druckfeder (25) aufweist, wobei sich die Bremsstange (13) von der Lauffläche des Rades (17) entfernt, sobald der Bremsgriff (18) in Bremsstellung gelöst und in die Freigabestellung zurückbewegt wird.

2. Bremsvorrichtung für Rädergestelle (10) nach Anspruch 1, dadurch gekennzeichnet, daß die Mittel an der Bremsgriffhalterung (15) zum lösbaren Festhalten des Bremsgriffes (18) in der Bremsstellung eine Führung (20) mit einem Führungsschlitz (19) in Längserstreckung aufweisen, in welchen der Bremsgriff (18) eingreift, wobei der Führungsschlitz (19) die Bewegung des Bremsgriffes (18) zwischen der Freigabestellung und der Bremsstellung festlegt und an einem Ende eine Queraussparung (22) aufweist, um den Bremsgriff (18) in der Bremsstellung festzuhalten.

3. Bremsvorrichtung für Rädergestelle (10) nach Anspruch 2, dadurch gekennzeichnet, daß am anderen Ende des Führungsschlitzes (19) eine weitere Queraussparung (21) vorgesehen ist, um den Bremsgriff (18) in der Freigabestellung festzuhalten.

4. Bremsvorrichtung für Rädergestelle (10) nach Anspruch 2 oder 3, dadurch gekennzeichnet, daß die Führung (20) eine den Führungsschlitz (19) schneidende Bohrung (23) aufweist, welche sich im wesentlichen rechtwinklig gegenüber dem zapfenförmig in den Führungsschlitz (19) eingreifenden Teil des Bremsgriffes (18) erstreckt, wobei die Bohrung (23) eine Gleithülse (24) aufnimmt, welche ihrerseits auf der Bremsstange (13) zwischen der ersten Druckfeder (25) und dem zapfenförmigen Teil des Bremsgriffes (18) gleitet.

5. Bremsvorrichtung für Rädergestelle (10) nach einem der Ansprüche 1 bis 4, dadurch gekennzeichnet, daß die Widerlager (26, 28) an der Bremsstange (13) als an die Bremsstange (13) angeschweißte Unterlegscheiben ausgebildet sind.

6. Rädergestell (10), welches zumindest eine Bremsvorrichtung mit einer Bremsstange (13), welche axialbeweglich in einer Radaufhängung (14) angeordnet ist, wobei ein Ende (16) der Bremsstange (13) zum Eingriff auf der Lauffläche eines Rades (17) eingerichtet ist, ferner mit einer Bremsgriffhalterung (15) und einem Bremsgriff (18), welcher zwischen einer Freigabestellung und Bremsstellung bewegbar ist, mit Mitteln an der Bremsgriffhalterung (15) zum lösbaren Festhalten des Bremsgriffes (18) in der Bremsstellung, und mit einer Druckfeder (25) zwischen dem Bremsgriff (18) und einem Widerlager (26) an der Bremsstange (13), wobei beim Beginn der Betätigung des Bremsgriffes (18) von der Freigabestellung aus die Bremsstange (13) in Eingriff mit dem Rad (17) bewegt wird, aufweist, dadurch gekennzeichnet, daß durch die weitergehende Betätigung des Bremsgriffes (18) in die Bremsstellung die Druckfeder (25) unter Belastung der Bremsstange (13) gegen das Rad (17) zusammengedrückt wird, und daß eine zweite Druckfeder (27) zwischen der Radaufhängung (14) und einem zweiten Widerlager (28) an der Bremsstange (13) vorgesehen ist, welche eine geringere Federkonstante als die erste Druckfeder (25) aufweist, wobei sich die Bremsstange (13) von der Lauffläche des Rades (17) entfernt, sobald der Bremsgriff (18) in Bremsstellung gelöst und in die Freigabestellung zurückbewegt wird.

7. Rädergestell (10) nach Anspruch 6, dadurch gekennzeichnet, daß ein Paar Bremsvorrichtungen vorgesehen ist, und zwar ein Paar für jedes Paar an Rädern (17).

8. Rädergestell (10) nach Anspruch 7, dadurch gekennzeichnet, daß die Bremsvorrichtungen durch einen gemeinsamen Bremsgriff (18) betätigt werden, welcher auf die Bremsstangen (13) einwirkt.

9. Rädergestell (10) nach Anspruch 8, dadurch gekennzeichnet, daß der Bremsgriff (18) mittels eines Verbindungshebels (30) mit einem Bremsstab (31) verbunden ist, welcher auf die Bremsstange (13) wirkt.

## Revendications

1. Mécanisme de freinage pour une unité à roues, comprenant : une tige de freinage (13) mobile dans le sens longitudinal dans un bâti de roue (14) et un assemblage formant poignée de freinage (15), une extrémité (16) de ladite tige de freinage (13) étant conçue pour se mettre en prise à la périphérie de la roue (17); une poignée de freinage (18) conçue pour se déplacer entre une position relâchée et une position de freinage; et des moyens sur l'assemblage formant poignée de montage pour retenir de manière amovible la poignée de freinage (18) dans la position de freinage; le mécanisme étant de plus muni d'un ressort travaillant en compression (25) entre la poignée de freinage (18) et une butée (26) sur la tige de freinage (13), le mouvement initial de la poignée de freinage (18) depuis la position relâchée déplaçant la tige de freinage (13) pour la mettre en prise avec la roue (17), caractérisé en ce qu'un mouvement continu de la poignée de freinage en direction de la position de freinage comprime le ressort (25) travaillant en compression pour contraindre la tige de freinage (13) contre la roue (17), et en ce qu'un deuxième ressort travaillant en compression (27) est prévu entre le bâti de roue et une seconde butée (28) sur la tige de freinage (13) ayant un calibre moindre que le premier ressort travaillant en compression (25), ce par quoi la tige de freinage (13) est relâchée de sa prise sur la roue (17) lorsque la poignée de freinage (18) est relâchée de la position de freinage et est ramenée dans la position relâchée.

2. Mécanisme de freinage pour une unité à roues selon la revendication 1, caractérisé en ce que les moyens de retenue sur l'assemblage formant poignée de freinage sont munis d'un bloc (20) ayant une fente longitudinale (19) en lui, dans laquelle la poignée de freinage dépasse, la fente, définissant le mouvement de la poignée entre la position relâchée et la position de freinage, étant munie à une extrémité d'un renfoncement latéral (21) pour maintenir la poignée de freinage dans la position de freinage.

3. Mécanisme de freinage pour une unité à roues selon la revendication 2, caractérisé en ce qu'un autre renfoncement latéral (22) est prévu à l'autre extrémité de la fente (19) pour maintenir la poignée de freinage dans la position de freinage.

4. Mécanisme de freinage pour une unité à roues selon la revendication 2 ou 3, caractérisé en ce que le bloc est muni d'un trou de guidage (23) formant une intersection avec la lente (19) substantiellement à angle droit à la partie de la poignée de freinage qui dépasse dans la fente, ledit trou recevant avec possibilité de glissement un manchon (24) qui peut glisser sur la tige de freinage entre le premier ressort travaillant en compression et la poignée de freinage.

5. Mécanisme de freinage pour une unité à roues selon l'une quelconque des revendications précédentes, caractérisé en ce que les butées (26, 28) sur la tige de freinage (13) sont fournies par des rondelles soudées sur la tige.

6. Unité à roues ayant au moins un mécanisme de freinage comprenant: une tige de freinage (13) mobile dans le sens longitudinal dans un bâti de roue (14) et un assemblage formant poignée de freinage (15), une extrémité (16) de ladite tige de freinage (13) étant conçue pour se mettre en prise à la périphérie de la roue (17); une poignée de freinage (18) conçue pour se déplacer entre une position relâchée et une position de freinage; et des moyens sur l'assemblage formant poignée de montage pour retenir de manière amovible la poignée de freinage (18) dans la position de freinage; le mécanisme étant de plus muni d'un ressort travaillant en compression (25) entre la poignée de freinage (18) et une butée (26) sur la tige de freinage (13), le mouvement initial de la poignée de freinage (18) déplaçant la tige de freinage (13) depuis la position relâchée pour la mettre en prise avec la roue (17), caractérisée en ce qu'un mouvement continu de la poignée de freinage en direction de la position de freinage comprime le ressort (25) travaillant en compression pour contraindre la tige de freinage (13) contre la roue (17), et en ce qu'un deuxième ressort travaillant en compression (27) est prévu entre le bâti de roue et une seconde butée (28) sur la tige de freinage (13) ayant un calibre moindre que le premier ressort travaillant en compression (25), ce par quoi la tige de freinage (13) est relâchée de sa prise sur la roue (17) lorsque la poignée de freinage (18) est relâchée de la position de freinage et est ramenée dans la position relâchée.

7. Unité à roues selon la revendication 6, caractérisée en ce qu'elle est munie d'une paire de mécanisme de freinage, un sur chacune d'une paire de roues (17).

8. Unité à roues selon la revendication 7, caractérisée en ce que les mécanismes sont actionnés par une poignée courante (18) agissant sur les tiges de freinage (13).

9. Unité à roues selon la revendication 8, caractérisée en ce que la poignée (18) est reliée au moyen d'une liaison (30) à une barre de freinage (31) qui agit sur les tiges de freinage (13).
